# EUROPÄISCHE PATENTSCHRIFT

(11) **EP 3 351 083 B1**
(45) Veröffentlichungstag und Bekanntmachung des Hinweises auf die Patenterteilung: **06.11.2019**
(21) Anmeldenummer: 18161369.6
(22) Anmeldetag: 02.03.2017
(51) Int. Cl.: A01C 21/00, A01C 17/00

(54) **SYSTEM UND EIN VERFAHREN ZUR ERFASSUNG WENIGSTENS EINES STREUPARAMETERS EINES STREUFÄHIGEN GUTES IM FELD**
SYSTEM AND A METHOD FOR DETECTING AT LEAST ONE DISPERSION PARAMETER OF A DISPERSIBLE GOOD IN THE FIELD
SYSTÈME ET PROCÉDÉ DE DÉTECTION D'AU MOINS UN PARAMÈTRE D'ÉPANDAGE D'UN PRODUIT À ÉPANDRE DANS UN CHAMP

(30) Priorität: 08.03.2016 DE 102016104143
(43) Veröffentlichungstag der Anmeldung: 25.07.2018
(62) Teilanmeldung aus: 17401019.9
(73) Patentinhaber: Amazonen-Werke H. Dreyer GmbH & Co. KG, 49205 Hasbergen (DE)
(72) Erfinder: Wild, Karl, 01454 Ullersdorf (DE)

(56) Entgegenhaltungen:
- DE-A1- 19 636 636
- DE-A1-102014 103 964
- DE-B3-102013 019 098

## Beschreibung

Die Erfindung betrifft ein System und ein Verfahren zur Erfassung wenigstens eines Streuparameters eines streufähigen Gutes im Feld gemäß des Oberbegriffes des Patentanspruches 1.

Ein derartiges System und ein derartiges Verfahren sind in DE102014103964A1 beschrieben. Zu verteilendes Gut, wie beispielsweise Mineraldünger, wird in vorgebbaren Verteilungen auf landwirtschaftlichen Nutzflächen ausgebracht. Das Flugverhalten der einzelnen Streugutpartikel hängt von Einflussgrößen wie beispielsweise Partikelform, Partikelgröße und/oder Schüttdichte ab, welche sich während des Verteilvorgangs ändern. Daher ist es notwendig, die Streuparameter, wie die Ist-Verteilung, insbesondere die Längs- und/oder Querverteilung, und die Wurfweite(n) und/oder -richtung(en) während des Verteilvorgangs zu untersuchen und mit den gewünschten Soll-Werten abzugleichen. Zu diesem Zweck werden vom Führer der Arbeitsmaschine quer zur Fahrtrichtung der landwirtschaftlichen Arbeitsmaschine Haft-/Prüfmatten ausgelegt, die geeignet sind, die verteilten Streugutpartikel im Wesentlichen am Ort ihres Auftreffens aufzufangen und festzuhalten. Dazu weisen diese Haft-/Prüfmatten eine Vielzahl regelmäßig verteilter Auffangräume auf. Die Ist-Verteilung der ausgebrachten Streugutpartikel auf den ausgelegten Haft-/Prüfmatten wird ohne notwendigen Transfer der Streugutpartikel zu einer separaten Messvorrichtung mit bildgebenden Mitteln bestimmt. Dazu wird die aufgefangene Ist-Verteilung in wenigstens einem digitalen Kamerabild festgehalten, auf welchem mit bildanalytischen Mitteln bei konstantem Kontrast zwischen Mattenhintergrund und Streugutpartikel die Positionen der einzelnen Partikel bestimmt werden. Dieser Schritt wird in einem programmierbaren, lichtbildfähigen Mobilgerät, beispielsweise Mobiltelefon, einem sogenannten Smartphone, durchgeführt. Im Anschluss werden von dem Mobilgerät oder nach Weitergabe der ermittelten Daten beispielsweise an die Recheneinheit der landwirtschaftlichen Arbeitsmaschine von dieser Recheneinheit durch Abgleich mit der eingestellten Soll-Verteilung erforderlichenfalls notwendige Korrekturmaßnahmen für die Betriebsparameter der Arbeitsmaschine abgeleitet. Dadurch werden Abweichungen zwischen Ist- und Soll-Verteilung erheblich minimiert. Durch das manuelle Auslegen der Haft-/Prüfmatten, das Bestreuen des entsprechenden Teilstücks der landwirtschaftlichen Nutzfläche sowie das anschließende Fotografieren der Matten und Auswerten der Daten durch den Maschinenführer muss der Arbeitsvorgang mehrfach unterbrochen werden. Der gesamte Vorgang benötigt zudem viel Zeit und muss bei einer Änderung der Einflussgrößen wiederholt werden.

Ein anderes gattungsgemäßes System ist aus DE 196 36 636 A1 bekannt.

Der Erfindung liegt daher die Aufgabe zugrunde, ein System und Verfahren zu schaffen, welches die Erfassung wenigstens eines Streuparameters von Streugutpartikeln in zeitökonomischer Weise ermöglicht.

Diese Aufgabe wird erfindungsgemäß dadurch gelöst, dass die Erfassung des wenigstens einen Streuparameters der Streupartikel des streufähigen Gutes durch wenigstens ein vorzugsweise im Wesentlichen senkrecht start- und landefähiges, vorzugsweise autonom agierendes, unbemanntes Luftfahrzeug (ULF) erfolgt, welches wenigstens eine Einheit zur Erfassung wenigstens eines Streuparameters der Streupartikel eines streufähigen Gutes aufweist, welches eine Einheit zum Senden und/oder Empfangen von Steuersignalen von einer und/oder an eine Basisstation und/oder landwirtschaftliche Arbeitsmaschine und zumindest eine Einheit zur Übermittlung der erfassten Daten an eine Basisstation und/oder an eine landwirtschaftliche Arbeitsmaschine aufweist und welches eine Einheit zur Positionsbestimmung aufweist.

Die Positionsbestimmung erfolgt beispielsweise über ein satellitengestütztes Ortungssystem, ein Koppelortungssystem, anhand bildanalytischer Methoden relativ zur Umgebung oder mittels externer Ortungssysteme.

Durch DE102013019098B3 sind unbemannte Luftfahrzeuge (ULF) bekannt. Derartige unbemannte Luftfahrzeuge sind vorzugsweise senkrecht start- und landefähig, sodass ihre Start- und Landevorrichtung auch an einem Bodenfahrzeug angeordnet werden kann. Dieses Bodenfahrzeug kann beispielsweise eine landwirtschaftliche Arbeitskombination, insbesondere bestehend aus Zugmaschine und Arbeitsmaschine, sein. Die unbemannten Luftfahrzeuge weisen eine nachfüllbare oder austauschbare Energiespeichereinheit und eine Funktionsein heit zur Erfassung von Parametern der Umwelt und Umgebung auf. Diese erfassten Parameter von Umwelt und Umgebung sind drahtlos an eine Steuerungseinrichtung der Start- bzw. Landevorrichtung und/oder des Bodenfahrzeugs übertragbar. Mithilfe einer Steuereinheit der Start- bzw. Landevorrichtung bzw. des Bodenfahrzeugs ist die autonome Bewegung des unbemannten Luftfahrzeugs steuerbar.

Die Steuerung des unbemannten Luftfahrzeugs kann autonom erfolgen und/oder alternativ durch einen Bediener, welcher ein externer Bediener sein kann oder der Führer der landwirtschaftlichen Arbeitsmaschine. Die Steuerung durch einen Bediener erfolgt ferngesteuert mittels einer mobilen Steuereinrichtung oder ausgehend von einer Steuerzentrale. Diese Steuereinrichtung oder -zentrale kann auf der landwirtschaftlichen Arbeitsmaschine, vorzugsweise in der Kabine der Zugmaschine angeordnet sein.

Vorteilhaft ist die Verwendung von senkrecht start- und landefähigen unbemannten Luftfahrzeugen, da sie keine Start- und Landebahnen oder Abschussvorrichtungen benötigen und somit nur geringe Anforderungen an eine Start- und Landevorrichtung stellen. Durch den Verzicht auf Tragflächen sind sie kompakt gebaut, sodass eine Start- und Landeplattform mobil am Feldrand aufgebaut oder auf der landwirtschaftlichen Arbeitsmaschine oder deren Zugmaschine angeordnet sein kann.

Die Verwendung von Multicoptern erlaubt das Fliegen bei niedrigen Geschwindigkeiten, die auf die Arbeitsgeschwindigkeit der Arbeitsmaschine abgestimmt werden können. Die Bewegung des unbemannten Luftfahrzeugs kann entweder autonom, computergesteuert oder ferngesteuert durch den Fahrzeugführer der Zugmaschine oder einen weiteren Bediener erfolgen. Dabei wird ein autonomes Agieren bevorzugt, weil es den notwendigen Arbeitsaufwand reduziert.

Der Einsatz unbemannter Luftfahrzeuge für verschiedene landwirtschaftliche Zwecke ist bekannt. Beispielsweise werden sie zur topographischen Aufklärung oder spektroskopischen Untersuchung von beispielsweise Pflanzenbeständen genutzt. Ihr Einsatz in erfindungsgemäßer Weise bringt bei der Erfassung der Streugutverteilung erhebliche Vorteile. Der Maschinenführer, der die Verteilqualität seiner Arbeitsmaschine überprüfen muss, spart signifikant Zeit bei der Durchführung des Verfahrens, weil wesentliche Schritte durch das unbemannte Luftfahrzeug übernommen werden. So können beispielsweise Prüfschalen zum Auffangen von Streugut vom unbemannten Luftfahrzeug selbst oder durch den Maschinenführer an zuvor durch das System festgelegten und durch das unbemannte Luftfahrzeug markierten Positionen ausgelegt werden. Dies erfolgt in präziserer Art und Weise, als es dem Maschinenführer allein durch Abschreiten oder Messen geeigneter Entfernungen möglich wäre. Dadurch werden die Qualität des Auswerteverfahrens sowie die Wirtschaftlichkeit des Arbeitsprozesses signifikant erhöht. Vor allem ein autonomes Agieren des unbemannten Luftfahrzeugs beispielsweise in Kombination mit einer kontaktfreien Erfassung des wenigstens einen Streuparameters mittels geeigneter Sensorik bildet die Grundlage für eine Echtzeit-Durchführung des Verfahrens während des laufenden Arbeitsprozesses. Wiederum wird dadurch die Wirtschaftlichkeit des Arbeitsprozesses erhöht, da beispielsweise jederzeit zum Erreichen einer gleichmäßigen Streugutverteilung regelnd in den Verteilprozess eingegriffen werden kann. Somit wird ein kosteneffizienter Streuguteinsatz und, insbesondere bei Düngemittel, ein gleichmäßig hoher Ertrag erreicht.

Der wenigstens eine ermittelte Streuparameter der Streupartikel eines streufähigen Gutes ist die Wurfweite(n) und/oder die Verteilung der ausgebrachten körnigen Streugutpartikel von streufähigem Gut. Durch die Kenntnis der Streuverteilung, insbesondere der Längs- und/oder Querverteilung, kann eine gewünschte, gleichmäßige Düngung des Pflanzenbestandes gewährleistet werden. Die Kenntnis und gegebenenfalls die Steuerung der Wurfweite(n) und/oder -richtung(en) verhindert beispielsweise das Auftreffen von Streugutpartikeln auf benachbarten Flächen oder Gewässern.

Legt beispielsweise der Maschinenführer an festgelegten Positionen Prüfmatten oder Prüfschalen aus, über welchen anschließend die Streugutpartikel des streufähigen Guts ausgebracht und zumindest teilweise aufgefangen und/oder festgehalten werden, ist in erfindungsgemäßer Weise vorgesehen, dass zumindest ein unbemanntes Luftfahrzeug (ULF) die Bestimmung der Positionen zum Auslegen von Prüfmatten oder -schalen übernimmt und die bestimmten Positionen für den Maschinenführer mit geeigneten Mitteln markiert. Hierzu steuert das unbemannte Luftfahrzeug die vorbestimmten Positionen an und markiert sie in geeigneter Weise. Die Markierung kann beispielsweise mittels Farbmittel, Schaum oder Wasser erfolgen. Dadurch sind dem System die Positionen der Prüfmatten bekannt und für den Maschinenführer erkennbar. Die Positionen werden in geeigneter Weise in einer Speichervorrichtung des Systems abgelegt. Diese Positionen der Prüfmatten gehen in den Algorithmus zur Ermittlung der Streuverteilung ein und müssten ohne Unterstützung durch das unbemannte Luftfahrzeug durch den Maschinenführer manuell beispielsweise mittels Messvorrichtung ermittelt werden. Die Festlegung der Mattenpositionen durch das unbemannte Luftfahrzeug bringt dem Maschinenführer eine erhebliche Zeitersparnis.

Das Verfahren wird in vorteilhafter Weise durchgeführt, wenn das unbemannte Luftfahrzeug von den ausgelegten Prüfmatten oder -schalen, nachdem über diesen die Streugutpartikel des streufähigen Guts ausgebracht worden sind, mittels einer Einrichtung zur digitalen Bildaufnahme ein der jeweiligen Matten- oder Schalenposition zugeordnetes Bild der Matte oder Schale mit den aufgefangenen und/oder festgehaltenen Streugutpartikeln aufnimmt. Das unbemannte Luftfahrzeug steuert die ausgelegten, bestreuten Prüfmatten an, deren Positionen ihm bekannt sind. Über ein bildgebendes Sensorsystem nimmt das Auswertesystem digitale Bilder von den Prüfmatten mitsamt der aufgefangenen Streugutpartikel auf, welche der jeweiligen Position zugeordnet sind.

Eine vorteilhafte Durchführung des erfindungsgemäßen Verfahrens wird dadurch erreicht, dass aus dem aufgenommenem Digitalbild mittels geeigneter Bildanalyse die Lage der Gutpartikel auf/in jeder Matte/Schale bestimmt wird, dass aus der Lage die Ist-Verteilung der Gutpartikel errechnet wird, dass diese Ist-Verteilung mit einer hinterlegten Soll-Verteilung abgeglichen wird und dass aus den bei diesem Abgleich festgestellten Differenzen Anpassungen der Betriebsparameter der Arbeitsmaschine abgeleitet werden.

Die Bildanalyse kann beispielsweise in einer Recheneinheit des unbemannten Luftfahrzeugs erfolgen oder nach Übermittlung der digitalen Bilddaten an eine Recheneinheit beispielsweise der landwirtschaftlichen Arbeitsmaschine in dieser Recheneinheit der landwirtschaftlichen Arbeitsmaschine. Die abgeleiteten Anpassungen der Betriebsparameter werden anschließend an die Steuereinheiten der Arbeitsmaschine weitergeleitet, die dann regelnd in den Verteilvorgang eingreifen und das Streubild in geeigneter Weise verändern, um die Ist-Verteilung an die eingestellte Soll-Verteilung anzupassen.

Eine wesentliche Vereinfachung des Verfahrens wird dadurch erreicht, dass die Prüfmatten oder -schalen von einem unbemannten Luftfahrzeug selbst ausgelegt und/oder eingesammelt werden. Dabei werden die Positionen, an denen die Prüfmatten ausgelegt werden in einer Speichervorrichtung des Systems in geeigneter Weise abgelegt und sind dem Auswertesystem somit bekannt. Bei Bedarf werden die an den bekannten Positionen ausgelegten Prüfmatten durch das unbemannte Luftfahrzeug eingesammelt. Beim autonomen oder ferngesteuerten Auslegen und/oder Einsammeln der Prüfmatten durch das unbemannte Luftfahrzeug, wird eine erhebliche Zeitersparnis erreicht, da der Maschinenführer seinen Führerstand nicht verlassen muss und somit den Arbeitsvorgang weniger lange zur Durchführung des erfindungsgemäßen Verfahrend unterbrechen muss.

Bestehen die ausgelegten Prüfmatten oder -schalen aus biologisch abbaubaren Material, ist dies eine weitere vorteilhafte Ausführung des erfindungsgemäßen Verfahrens. Die ausgelegten und bestreuten Prüfmatten müssen nach Abschluss des Verfahrens und/oder des Arbeitsvorgangs nicht eingesammelt werden und können auf der Nutzfläche verbleiben. Dadurch wird die Zeit eingespart, die zum Einsammeln der Prüfmatten aufgebracht werden müsste.

Eine weitere vorteilhafte Ausführung des erfindungsgemäßen Verfahrens wird erreicht, indem anstelle der Prüfmatten oder -schalen geeigneter Schaum und/oder Farbmittel verwendet wird. Schaum und/oder Farbmittel sind vorzugsweise umweltverträglich und/oder biologisch abbaubar ausgeführt, sodass sie auf der Nutzfläche verbleiben können. Vorteil bei der Verwendung von Schaum und/oder Farbmittel ist deren geringes Eigengewichtung und Volumen. Dadurch können sie in einfacher Weise von einem unbemannten Luftfahrzeug mitgeführt und ausgebracht werden. Des Weiteren kann somit auf die Nutzung spezieller, genormter Prüfmatten oder -schalen beispielsweise in rechteckiger Form verzichtet werden.

Die ausgebrachten Streugutpartikel treffen auf das ausgebrachte Farbmittel auf und ihre Positionen sind mit bildanalytischen Mitteln aus den aufgenommenen Digitalfotos aufgrund ihres Kontrastes ermittelbar. Treffen die Streugutpartikel auf ausgebrachten, beispielsweise gefärbten Schaum, sind auf den Digitalfotos die Einschlagstellen sichtbar und deren Positionen wiederum mit bildanalytischen Mitteln ermittelbar. Die ermittelten Positionen werden jeweils in den Auswertungsprozess des erfindungsgemäßen Verfahrens weitergeleitet.

Müssen die ausgebrachten Farbmittel oder der ausgebrachte Schaum keine festgelegte Form aufweisen, kann die Zeit eingespart werden, die zur Ausbringung des Farbmittels oder des Schaumes in einer festgelegten Form aufgebracht werden müsste. Von Vorteil ist es daher, wenn die Form und/oder Größe der Prüfmatten oder -schalen oder des Schaumes und/oder des Farbmittels mittels bildanalytischer Mittel aus den aufgenommenen Bildern bestimmt wird.

Aus der Verteilung des Streugutes kann/können auch die Wurfweite(en) der Streugutpartikel abgeleitet werden und/oder die Breite des Streufächers. Eine weitere Einsatzmöglichkeit für das erfindungsgemäße Verfahren ist beispielsweise die Kontrolle eines exakten Grenzstreuens. Dazu werden die Prüfmatten oder - schalen oder der Schaum und/oder das Farbmittel an den Feldgrenzen ausgebracht. Anschließend wird mithilfe des erfindungsgemäßen Verfahrens überprüft, ob Streugut durch die Prüfmatten oder -schalen aufgefangen worden ist, woraufhin die Betriebsparameter der Arbeitsmaschine in geeigneter Weise nachgeregelt werden.

Eine von der beanspruchten Erfindung abweichende Ausführung des Verfahrens ist gegeben, wenn auf das Auslegen von Prüfmatten oder -schalen und das Festlegen von dafür geeigneten Positionen verzichtet und somit erheblich Zeit eingespart werden kann. Dies wird erreicht, indem das unbemannte Luftfahrzeug den Teilchenstrom des streufähigen Gutes während des Verteilvorgangs mittels Sensoren erfasst.

Der Vorteil einer direkten Erfassung der Streugutpartikel durch ein unbemanntes Luftfahrzeug, welches mit geeigneten Sensoren ausgestattet ist, liegt darin, dass das erfindungsgemäße Verfahren kontinuierlich während des Arbeitsvorganges der landwirtschaftlichen Arbeitsmaschine durchgeführt werden kann und somit auch die Grundvoraussetzung für eine Echtzeit-Anwendung geschaffen wird. Geeignete Sensoren sind vorzugsweise kontaktfrei als Radar- oder Laserscanner oder mechanisch beispielsweise als Prallplatte mit zugeordnetem Piezzoelement als Messaufnehmer ausgeführt.

Die Erfassung der Ist-Verteilung wird dadurch erreicht, dass die Ausbreitungsrichtung(en) und -geschwindigkeit(en) der Teilchen des streufähigen Gutes durch die Erfassungseinrichtungen des unbemannten Luftfahrzeugs bestimmt und daraus die Flugweite der Teilchen ermittelt werden. Durch die Erfassung lediglich der Messwerte für Ausbreitungsrichtung(en) und -geschwindigkeit(en) und durch die anschließende Ermittlung der Flugweite der Partikel kann über rechnerische und/oder statistische Verfahren das gesamte Streubild rekonstruiert werden.

Das unbemannte Luftfahrzeug bewegt sich zur Erfassung der Ausbreitungsrichtung(en) und -geschwindigkeit(en) der Streugutpartikel mittels Sensoren vorzugsweise im Bereich der Streufächerausdehnung. Dadurch befindet es sich in der Nähe des Partikelstroms, sodass bei endlichem Auflösungsvermögen der Sensoren eine sichere Erfassung der Ausbreitungsrichtung(en) und -geschwindigkeit(en) der Streugutpartikel sichergestellt ist.

Die aus den Messwerten für die Ausbreitungsrichtung(en) und - geschwindigkeit(en) ermittelten Wurfweiten(en) der Teilchen werden mit Sollwerten abgeglichen und aus den bei diesem Abgleich festgestellten Differenzen werden Anpassungen der Betriebsparameter der Arbeitsmaschine abgeleitet. Die Sollwerte sind dazu in einer Speichereinheit beispielsweise der landwirtschaftlichen Arbeitsmaschine hinterlegt. Die abgeleiteten Anpassungen der Betriebsparameter der Arbeitsmaschine werden an Steuereinheiten der Arbeitsmaschine weitergeleitet. Diese Steuereinheiten greifen dann regelnd in den Verteilvorgang ein, um die Ist-Verteilung an die eingestellte Soll-Verteilung anzupassen.

Um die Ist-Verteilung der Streugutpartikel aus der direkten Erfassung der Ausbreitungsrichtung(en) und -geschwindigkeit(en) der Streugutpartikel zu ermitteln, ist es vorteilhaft, dass die Erfassungseinrichtungen des unbemannten Luftfahrzeugs zumindest den überwiegenden Teil des Streufächers der Arbeitsmaschine von einer Position oberhalb des Streufächers aus erfassen. Dadurch ist zu jedem Erfassungszeitpunkt eine breite Datenbasis gegeben, die die Qualität der ermittelten Ist-Verteilung erhöht.

Bei einem endlichen Auflösungsvermögen der verwendeten Erfassungseinrichtung und einer sehr großen Arbeitsbreite der Arbeitsmaschine kann das unbemannte Luftfahrzeug nicht den überwiegenden Teil des Streufächers erfassen, sodass es vorteilhaft ist, dass das unbemannte Luftfahrzeug den Streufächer abfliegt und abschnittsweise mittels Erfassungseinrichtungen erfasst. Durch das abschnittsweise Erfassen des Streufächers können Ausbreitungsrichtung(en) und - geschwindigkeit(en) der Streugutpartikel mit hoher Sicherheit ermittelt werden.

Mithilfe des nicht unter die beanspruchte Erfindung fallenden Verfahrens kann ein exaktes Grenzstreuverhalten kontrolliert werden. Dazu ist es vorteilhaft, wenn das unbemannte Luftfahrzeug im Bereich der Feldgrenze, oberhalb dieser, vorzugsweise senkrecht über dieser fliegt und dort mittels Sensoren erfasst, ob der Teilchenstrom die Feldgrenze überschreitet. Ist dies der Fall, wird durch das erfindungsgemäße Verfahren die Wurfweite(en) und/oder -richtung(en) der Streugutpartikel in geeigneter Weise reguliert werden.

Es ist erfindungsgemäß, das beanspruchte Verfahren mit einem System durchzuführen, das ein unbemanntes Luftfahrzeug aufweist und dass das unbemannte Luftfahrzeug auf der landwirtschaftlichen Arbeitsmaschine start- und landefähig ist. Dadurch werden keine besonderen Anforderungen an eine Start- und Landevorrichtung gestellt, da keine Landebahn einer bestimmten Länge benötigt wird.

Damit ein ferngesteuerter oder autonomer und vor allem ein vorzugsweise über den gesamten Verteilvorgang andauernder Einsatz des unbemannten Luftfahrzeugs möglich ist, ist erfindungsgemäß vorgesehen, dass das unbemannte Luftfahrzeug eine wieder auffüllbare und/oder austauschbare Energiespeichereinheit aufweist. Somit ist nach nur kurzen zum Auffüllen und/oder Austauschen der Energiespeichereinheit notwendigen Einsatzunterbrechungen das unbemannte Luftfahrzeug erneut betriebsbereit.

Zur Aufnahme von digitalen Fotografien der Prüfmatten oder -schalen ist es notwendig, dass das unbemanntes Luftfahrzeug mit einer Einrichtung zur digitalen Bildaufnahme und mit einer Einheit zur Analyse der digital aufgenommenen Bilder und/oder mit einer Einheit zum Senden der digital aufgenommenen Bilder an eine mit einer Einheit zur Bildanalyse ausgestattete Basisstation und/oder landwirtschaftliche Arbeitsmaschine ausgestattet ist.

Sollen darüber hinaus die Prüfmatten oder -schalen ferngesteuert oder autonom von dem unbemannten Luftfahrzeug ausgelegt und/oder eingesammelt werden, ist es erfindunggemäß, dass das unbemannte Luftfahrzeug mit einer Einrichtung zum Transportieren und Verteilen und/oder Einsammeln von Prüfmatten oder -schalen oder Schaum und/oder Farbmittel ausgestattet ist. Dadurch spart der Maschinenführer die Zeit ein, die er für die manuelle Ausführung dieses Verfahrensschrittes benötigte.

Ausbreitungsrichtung(en) und -geschwindigkeit(en) der ausgebrachten Streugutpartikel werden von einem unbemannten Luftfahrzeug in einer nicht beanspruchten Ausführung beispielsweise mittels Sensorik gemessen. Eine kostengünstige Lösung ergibt sich dadurch, dass der Sensor ein mechanischer Sensor, beispielsweise Prallplatte oder Membran ist, mit einem Messaufnehmer, beispielsweise Piezzoelement, und dieser Sensor vom Teilchenstrom beschossen wird.

Um das unbemannte Luftfahrzeug nicht zu nahe am oder im Teilchenstrom einzusetzen, wird bevorzugter Weise die Ausführung vorgeschlagen, dass das unbemannte Luftfahrzeug Sensoren zur kontaktfreien Erfassung des Teilchenstroms aufweist, vorzugsweise Radarscanner, Laserscanner oder eine Kamera zur Aufnahme digitaler Bilder vorzugsweise mitsamt einer Einheit zur Bildauswertung. Dadurch wird die Flugstabilität des unbemannten Luftfahrzeugs nicht durch Teilchenbeschuss gefährdet.

Eine vorteilhafte Ausgestaltung des Systems zur Duchführung des nicht beanspruchten Verfahrens ist dadurch gegeben, dass das unbemannte Luftfahrzeug mit geeigneter, insbesondere kontaktfreier, Sensorik zur dreidimensionalen Erfassung des Streufächers 9, beispielsweise einer 3D-Kamera, ausgestattet ist. Aus einer dreidimensionalen Erfassung des Streufächers lassen sich zusätzliche Informationen aus den ermittelten Werten ableiten.

Eine weitere vorteilhafte Ausgestaltung des Systems sieht vor, dass zumindest zwei unbemannte Luftfahrzeuge mit geeigneter Sensorik zur Erfassung der Struktur des Streufächers eingesetzt werden, um die Streuverteilung dreidimensional zu erfassen. Der Einsatz mehrerer unbemannter Luftfahrzeuge ermöglicht das Aufteilen des Arbeitsaufwandes und bewirkt eine erhebliche Zeitersparnis. Zusätzlich wird die Genauigkeit der Erfassung erheblich verbessert, da beispielsweise unter schwierigen Bedingungen auch eine gleichzeitige Erfassung mehrerer Abschnitte des Streufächers möglich ist.

Weitere Einzelheiten der Erfindung sind der Beispielsbeschreibung und den Zeichnungen zu entnehmen. Die Zeichnungen zeigen
- Fig.1: eine landwirtschaftliche Arbeitsmaschine, welche Streugutpartikel über einer Nutzfläche ausbringt, wobei ein begleitendes unbemanntes Luftfahrzeug an der Feldgrenze zur Kontrolle des Grenzstreuens ausgelegte Prüf/Haftmatten ablichtet in einer Ansicht von oben,
- Fig.2: die landwirtschaftliche Arbeitsmaschine, welche in Begleitung eines unbemannten Luftfahrzeugs Streugutpartikel über Haft-/Prüfmatten ausbringt wie in Fig. 1, jedoch in perspektivischer Ansicht von schräg vorne,
- Fig.3: die landwirtschaftliche Arbeitsmaschine, welche in Begleitung eines unbemannten Luftfahrzeugs Streugutpartikel über Haft-/Prüfmatten ausbringt nach den Fig. 1 und 2, in perspektivischer Ansicht von schräg hinten,
- Fig.4: die landwirtschaftliche Arbeitsmaschine, welche Streugutpartikel über Haft/Prüfmatten ausbringt, wobei diese Haft-/Prüfmatten von einem begleitenden unbemannten Luftfahrzeug fotografisch abgebildet werden nach den vorhergehenden Fig. 1 bis 3, jedoch in einer Ansicht von hinten,
- Fig.5: die landwirtschaftliche Arbeitsmaschine, welche in Begleitung eines unbemannten Luftfahrzeugs Streugutpartikel über Haft-/Prüfmatten ausbringt nach den vorhergehenden Fig. 1 bis 4, jedoch in einer Ansicht von oben,
- Fig.6: eine landwirtschaftliche Arbeitsmaschine, welche Streugutpartikel über einer Nutzfläche ausbringt, wobei ein begleitendes unbemanntes Luftfahrzeug Ausbreitungsrichtung(en) und -geschwindigkeit(en) der Partikel kontaktfrei erfasst in einer Ansicht von oben,
- Fig.7: eine landwirtschaftliche Arbeitsmaschine, welche Streugutpartikel über einer Nutzfläche ausbringt, wobei ein begleitendes unbemanntes Luftfahrzeug Ausbreitungsrichtung(en) und -geschwindigkeit(en) der Partikel kontaktfrei erfasst in einer Ansicht von vorne und
- Fig.8: eine landwirtschaftliche Arbeitsmaschine, welche Streugutpartikel über einer Nutzfläche ausbringt, wobei ein begleitendes unbemanntes Luftfahrzeug Ausbreitungsrichtung(en) und -geschwindigkeit(en) der Partikel mechanisch erfasst in einer Ansicht von vorne.

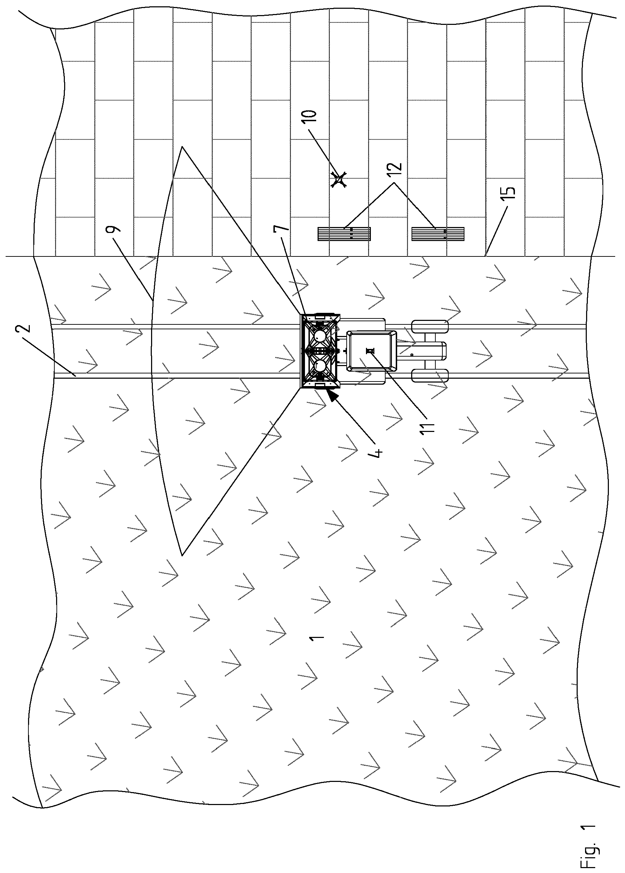

Auf einer in Fig. 1 nur teilweise dargestellten landwirtschaftlichen Nutzfläche 1 sind beispielsweise von einem elektronisch basierten Managementsystem in bekannter und daher nicht näher erläuterter Weise Fahrspuren 2 für weitere Bearbeitungsschritte der Nutzfläche 1 angelegt worden. In diesen Fahrspuren 2 bewegt sich eine landwirtschaftliche Arbeitskombination, bestehend aus einer Zugmaschine 3 und einer Arbeitsmaschine 4. Die Arbeitsmaschine 4 ist in dem gewählten Beispiel als angebauter Zentrifugaldüngerstreuer ausgebildet, wie in den Fig. 1 bis 8 gezeigt ist.

Die Arbeitsmaschine 4 ist mittels an ihrem Rahmen 5 angeordneten Kupplungselementen an einem Dreipunktkraftheber der Zugmaschine 3 angebaut. Die Arbeitsmaschine 4 weist zur Bevorratung der zu verteilenden Streugutpartikel 6, wie Dünger, einen Vorratsbehälter 7 auf, der sich auf den Rahmen 5 abstützt. Die zu verteilenden Streugutpartikel 6 werden beim Verteilvorgang über der zu bearbeitenden landwirtschaftlichen Nutzfläche 1 mittels Dosierorganen in einstellbaren Mengen auf in veränderbarer Weise ansteuerbare Schleuderscheiben 8 gegeben. Die Schleuderscheiben 8 werfen die zu verteilenden Streugutpartikel in bekannter Weise breitwürfig nach hinten und zu beiden Seiten ab, wobei sich ein Streufächer 9 in dreidimensionaler Weise ausbildet. Um das Streubild zu charakterisieren und eine gleichmäßige Verteilung der Streugutpartikel 6 in gewünschter Weise zu erreichen, werden Verteilung und Wurfweite(en) der Streugutpartikel 6 ermittelt.

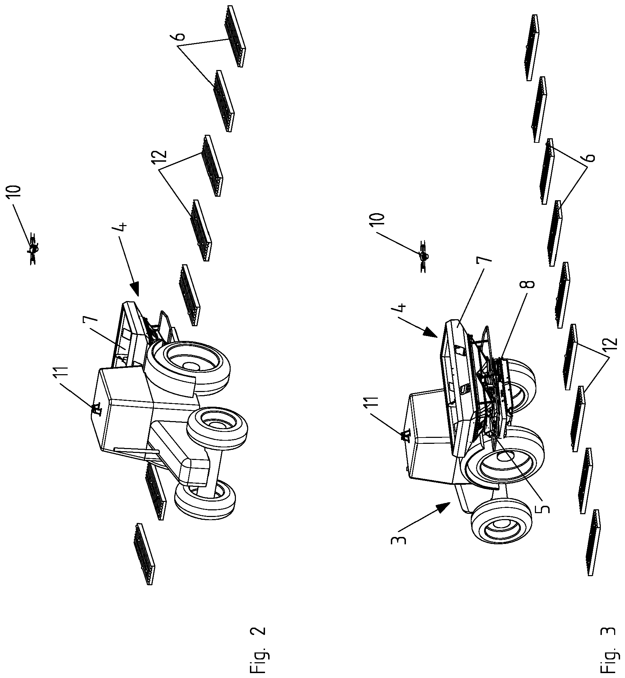

Zur Ermittlung von Verteilung und Wurfweite(en) der abgeworfenen Streugutpartikel 6 wird ein unbemanntes Luftfahrzeug 10 mitsamt geeigneter Sensorik eingesetzt. In den Ausführungsbeispielen der Fig. 1 bis 8 ist das unbemannte Luftfahrzeug 10 als senkrecht start- und landefähiger Quadrocopter ausgebildet. Die Start- und Landevorrichtung 11 des unbemannten Luftfahrzeugs 10 ist an geeigneter Stelle der landwirtschaftlichen Arbeitskombination angebracht. Im gewählten Ausführungsbeispiel ist sie auf dem Kabinendach der Zugmaschine 3 angeordnet, wie in den Fig. 2 und 3 gezeigt. Von dieser Start- und Landevorrichtung 11 startet das unbemannte Luftfahrzeug 10 und ist mit austauschbaren und/oder auffüllbaren Energiespeichereinheiten sowie mit Vorrichtungen zur drahtlosen Kommunikation mit der Basisstation und/oder landwirtschaftlichen Zugmaschine 3 und/oder Arbeitsmaschine 4 ausgestattet. Das unbemannte Luftfahrzeug 10 weist wenigstens eine Erfassungsvorrichtung zur Erfassung wenigstens eines Streuparameters der abgeworfenen Streugutpartikel 6 auf.

Zur Ermittlung der Verteilung der Streugutpartikel 6 über der landwirtschaftlichen Nutzfläche 1 werden an geeigneten Positionen geeignete Haft- und/oder Prüfmatten 12 ausgelegt. Dazu werden die geeigneten Positionen zunächst vom Auswertesystem bestimmt. Anschließend markiert das unbemannte Luftfahrzeug 10 entsprechend den von dem Auswertesystem ermittelten Daten die geeigneten Positionen in für den Maschinenführer erkennbarer Weise, sodass dieser die Prüfmatten 12 manuell auslegen kann. Diese errechneten und markierten Positionen werden in geeigneter Weise im Speicher beispielsweise des Auswertesystems abgelegt. Ebenso ist ein vom Maschinenführer ferngesteuertes Auslegen der Prüfmatten 12 mithilfe des unbemannten Luftfahrzeugs 10 oder ein autonomes Auslegen der Prüfmatten 12 an den dem System bekannten Positionen durch das unbemannte Luftfahrzeug 10, welches zu diesem Zweck mit einer Einrichtung zum Transportieren und Verteilen der Prüfmatten 12 ausgestattet ist, möglich. Eine zum Fernsteuern des unbemannten Luftfahrzeugs 10 geeignete Steuervorrichtung kann transportabel, beispielsweise für einen weiteren Bediener, ausgeführt und/oder kann beispielsweise in der Kabine der Zugmaschine 3 angeordnet sein.

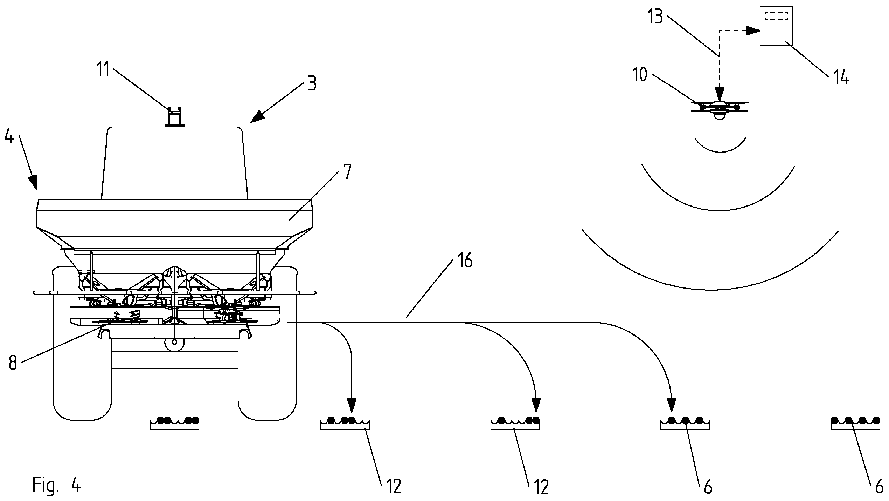

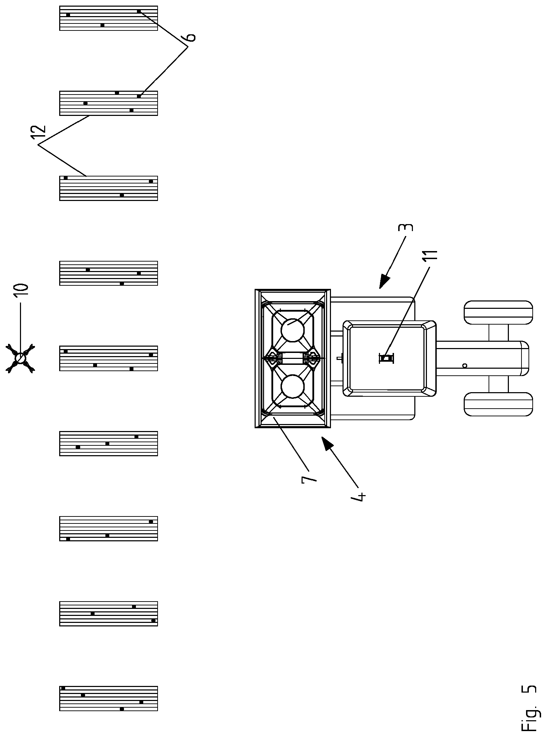

Der Verteilvorgang des zu verteilenden Streugutes 6 wird in dem Abschnitt der landwirtschaftlichen Nutzfläche 1 durchgeführt, in dem die Prüfmatten 12 ausgelegt sind, wobei auch die Prüfmatten 12 in bekannter Weise bestreut werden. Nach dem Verteilvorgang steuert das unbemannte Luftfahrzeug 10 die ihm bekannten Positionen der ausgelegten und bestreuten Prüfmatten 12 an und positioniert sich oberhalb der Prüfmatten 12, wie es in Fig. 4 und 5 gezeigt ist. Dort nimmt es mittels einer Einrichtung zur digitalen Bildaufnahme digitale Fotografien der bestreuten Prüfmatten 12 auf, die den Positionen der Prüfmatten 12 zugeordnet sind. Diese aufgenommenen digitalen Bilder werden in einer mitgeführten Recheneinheit ausgewertet oder zur Auswertung über eine Vorrichtung zur drahtlosen Kommunikation 13 an eine Auswerteeinheit 14 beispielsweise der Zugmaschine 3 oder der Arbeitsmaschine 4 übermittelt, wie in Fig. 4 gezeigt ist.

Die Auswertung der digitalen Bilddaten erfolgt mittels bildanalytischer Methoden und bestimmt die Positionen der aufgefangenen Streugutpartikel 6 auf den Prüfmatten 12. Aus den ermittelten Partikelpositionen auf den Prüfmatten 12 wird die Ist-Verteilung über den gesamten Streufächer 9 errechnet. Die ermittelte Ist-Verteilung wird anschließend mit der eingestellten Soll-Verteilung abgeglichen. Aus den ermittelten Differenzen werden basierend auf in einer Speichereinheit abgelegten Einstellwerten der Arbeitsmaschine 4 Anpassungen der Betriebsparameter der Arbeitsmaschine 4 abgeleitet. Diese aktualisierten Betriebsparameter werden an die Steuereinheiten der Arbeitsmaschine 4 weitergeleitet, woraufhin diese Steuereinheiten regelnd in den Verteilvorgang eingreifen. Dabei werden die Einstellungen beispielsweise der Dosierorgane, der Schleuderscheiben 8 und/oder der Wurfschaufeln in geeigneter Weise verändert, sodass die Ist-Verteilung der eingestellten Soll-Verteilung angepasst wird.

Im Anschluss an die Durchführung des erfindungsgemäßen Verfahrens und/oder nach Beendigung des Arbeitsvorgangs werden die Prüfmatten 12 zur Wiederverwendung wieder eingesammelt. Dies geschieht manuell durch den Maschinenführer oder mithilfe eines unbemannten Luftfahrzeugs 10 ferngesteuert oder autonom. Der Arbeitsaufwand für das Einsammeln der Prüfmatten 12 wird eingespart, wenn die Prüfmatten 12 aus biologisch abbaubarem Material bestehen und somit auf der Nutzfläche 1 verbleiben können.

Auf analoge Weise kann das Verfahren zur Kontrolle des Grenzstreuverhaltens eingesetzt werden, wie es in Fig. 1 gezeigt ist. Dazu werden die Prüfmatten 12 auf beschriebene Weise auf der Feldgrenze 15 positioniert. Arbeitet die Arbeitsmaschine 4 in der Nähe der Feldgrenze 15, arbeitet das unbemannte Luftfahrzeug 10 in beschriebener Weise, steuert die Prüfmatten 12 an und nimmt digitales Bildmaterial auf. Werden mithilfe der bildanalytischen Methoden Streugutpartikel 6 auf den auf der Feldgrenze 15 befindlichen Prüfmatten 6 identifiziert, wird/werden die Wurfweite(n) auf der entsprechenden Seite der Arbeitsmaschine 4 in beschriebener Weise geeignet nachgeregelt.

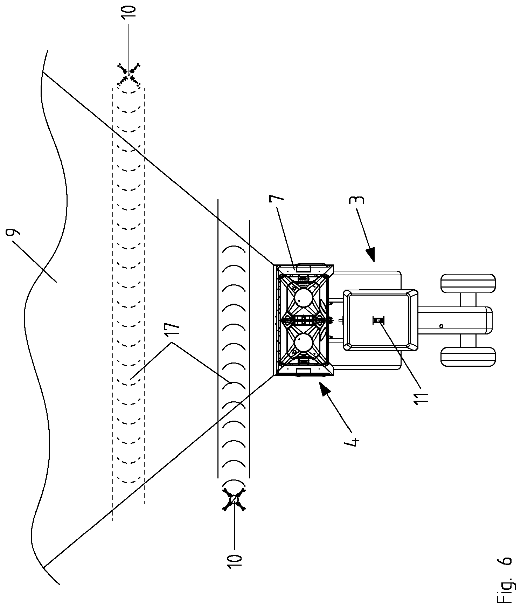

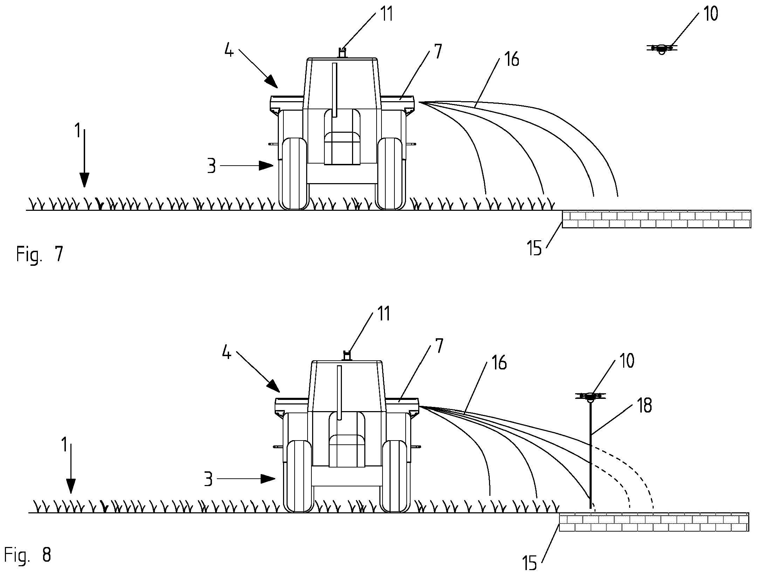

Eine weitere vorteilhafte Ausführungsform wird durch eine direkte Erfassung der abgeworfenen Streugutpartikel 6 erreicht, wie in den Fig. 6 und 7 gezeigt. Das unbemannte Luftfahrzeug bewegt sich in der Nähe des Streufächers 9 und erfasst beispielsweise mittels mitgeführter Radar- oder Laserscan-Technik den Teilchenstrom 16 der Streugutpartikel 6. Dies geschieht in nicht dargestellter Weise von einer seitlichen Position oder vorzugsweise von einer Position oberhalb des Streufächers 9, wie es Fig. 7 zeigt.

Abhängig von der Ausdehnung des Streufächers 9 und dem Auflösungsvermögen der mitgeführten Erfassungstechnik erfassen die Sensoren des unbemannten Luftfahrzeugs 10 den überwiegenden Teil des Teilchenstroms 16 des Streufächers 9 oder den Teilchenstrom 16 des Streufächers 9 in Abschnitten 17. Dabei werden Ausbreitungsrichtung(en) und -geschwindigkeit(en) der abgeworfenen Streugutpartikel 6 ermittelt. Aus diesen Werten werden die Flugweiten der Streugutpartikel ermittelt und daraus die Ist-Verteilung der Streugutpartikel abgeleitet. Durch den Abgleich mit einer Soll-Verteilung werden Differenzen ermittelt, die in beschriebener Weise zur Anpassung der Betriebsparameter der Arbeitsmaschine 4 herangezogen werden.

Eine kostengünstigere Ausführungsform wird dadurch erreicht, dass das unbemannte Luftfahrzeug 10 mit mechanischen Sensoren zur Erfassung von Ausbreitungsrichtung(en) und -geschwindigkeit(en) ausgestattet ist. Dazu eignet sich vorzugsweise eine Prallplatte 18, die mithilfe des unbemannten Luftfahrzeugs 10 in den Teilchenstrom 16 eingebracht wird. Dort wird die Prallplatte 18 von den abgeworfenen Streugutpartikeln 6 getroffen. Ein nachgeordneter Messaufnehmer, beispielsweise ein Piezzoelement, dient der Feststellung beispielsweise des Impulses der auftreffenden Streugutpartikel, aus dem unter Berücksichtigung ihrer durchschnittlichen Masse die Ausbreitungsgeschwindigkeit in einer Ausbreitungsrichtung ermittelt wird. In beschriebener Weise werden so die Flugweiten der Streugutpartikel und anschließend die Ist-Verteilung rekonstruiert. Durch den Abgleich mit einer Soll-Verteilung werden Differenzen ermittelt, die in beschriebener Weise zur Anpassung der Betriebsparameter der Arbeitsmaschine 4 herangezogen werden.

Mit den beschriebenen nicht der beanspruchten Erfindung entsprechenden Verfahrensvarianten mit der direkten Erfassung der Streugutpartikel 6 mittels kontaktfreier oder mechanischer Sensorik des unbemannten Luftfahrzeugs 10 kann das Grenzstreuen kontrolliert werden. Dazu wird mithilfe der mitgeführten Sensorik überprüft, ob Streugutpartikel eine festgelegte Grenze, wie beispielsweise die Feldgrenze 15, von abgeworfenen Streugutpartikeln 6 überschritten wird. Für den Fall, dass ein Überschreiten festgestellt wird, wird/werden die Ist-Verteilung und/oder die Wurfweite(en) in beschriebener Weise geeignet nachgeregelt.

Nachdem die Ist-Verteilung durch eine der beschriebenen Ausführungsformen des nicht erfindungsgemäßen Verfahrens ermittelt ist, kann/können aus dieser Verteilung stets auch die Wurfweite(en) der Streugutpartikel 6 abgeleitet werden. Zudem sind die Abmessungen der Ist-Verteilung des Streufächers 9 und damit die Ausdehnung des Streufächers 9 quer zur Fahrtrichtung bekannt.

Durch den Einsatz geeigneter, insbesondere kontaktfreier, Sensorik zur dreidimensionalen Erfassung des Streufächers 9 darüber hinaus die dreidimensionale Form des Streufächers 9 rekonstruiert werden. Dies kann auch durch den Einsatz mehrerer unbemannter Luftfahrzeuge erfolgen.

Beim Einsatz mehrerer unbemannter Luftfahrzeuge 10 kann der erforderliche Arbeitsaufwand auf diese mehreren unbemannten Luftfahrzeuge 10 verteilt werden. Dies würde eine signifikante Zeitersparnis bewirken.

Die Verwendung unbemannter Luftfahrzeuge 10 ermöglicht insbesondere bei prüfmattenunabhängiger Sensorik einen Echtzeit-Einsatz des nicht erfindungsgemäßen Verfahrens. Dadurch kann das Verfahren beliebig oft wiederholt werden oder kontinuierlich während des Arbeitsprozesses durchgeführt werden. Dadurch kann eine Abweichung der Ist-Verteilung beispielsweise aufgrund sich ändernder Umgebungsparameter kontinuierlich in Echtzeit durch Abgleich mit der eingestellten Soll-Verteilung korrigiert werden.

## Patentansprüche

1. Verfahren zur Erfassung wenigstens eines Streuparameters der Streupartikel (6) eines streufähigen Gutes im Feld, wobei das streufähige Gut von einer vorzugsweise landwirtschaftlichen Arbeitsmaschine (4) ausgebracht wird, wobei die Erfassung des wenigstens einen Streuparameters der Streupartikel (6) des streufähigen Gutes durch wenigstens ein vorzugsweise im Wesentlichen senkrecht start- und landefähiges, vorzugsweise autonom agierendes, unbemanntes Luftfahrzeug (ULF) (10) erfolgt, welches wenigstens eine Einheit zur Erfassung wenigstens eines Streuparameters der Streupartikel (6) eines streufähigen Gutes aufweist, welches eine Einheit zum Senden und/oder Empfangen von Steuersignalen von einer und/oder an eine Basisstation und/oder landwirtschaftliche Arbeitsmaschine (6) und zumindest eine Einheit zur Übermittlung (13) der erfassten Daten an eine Basisstation und/oder an eine landwirtschaftliche Arbeitsmaschine (4) aufweist und welches eine Einheit zur Positionsbestimmung aufweist, dass Streuparameter der Streupartikel (6) eines streufähigen Gutes die Wurfweite(n) und/oder die Verteilung der ausgebrachten körnigen Streugutpartikel (6) von streufähigem Gut sind, wobei der Maschinenführer an festgelegten Positionen Prüfmatten oder Prüfschalen (12) oder Schaum und/oder Farbmittel auslegt, worüber anschließend die Streugutpartikel (6) des streufähigen Guts ausgebracht und zumindest teilweise aufgefangen und/oder festgehalten werden, wobei das zumindest eine unbemannte Luftfahrzeug (ULF) (10) die Bestimmung der Positionen zum Auslegen von Prüfmatten oder -schalen (12) oder Schaum und/oder Farbmitteln übernimmt und die bestimmten Positionen für den Maschinenführer mit geeigneten Mitteln markiert.

2. Verfahren nach Anspruch 1, **dadurch gekennzeichnet, dass** das unbemannte Luftfahrzeug (10) von den ausgelegten Prüfmatten oder -schalen (12) oder Schaum und/oder Farbmitteln nachdem über diesen die Streugutpartikel (6) des streufähigen Guts ausgebracht worden sind, mittels einer Einrichtung zur digitalen Bildaufnahme ein der jeweiligen Matten-, Schalen-, Schaum und/oder Farbmittelposition zugeordnetes Bild der Matte oder Schale (12) oder des Schaumes und/oder Farbmittels mit den aufgefangenen und/oder festgehaltenen Streugutpartikeln (6) aufnimmt.

3. Verfahren nach dem vorstehenden Anspruch 2 **dadurch gekennzeichnet, dass** aus dem aufgenommenem Digitalbild mittels geeigneter Bildanalyse die Lage der Gutpartikel (6) auf/in jeder Matte/Schale (12) / jedem Schaum und/oder Farbmittel bestimmt wird, dass aus der Lage die Ist-Verteilung der Gutpartikel (6) errechnet wird, dass diese Ist-Verteilung mit einer hinterlegten Soll-Verteilung abgeglichen wird und dass aus den bei diesem Abgleich festgestellten Differenzen Anpassungen der Betriebsparameter der Arbeitsmaschine (4) abgeleitet werden.

4. Verfahren nach dem vorstehenden Anspruch 3, **dadurch gekennzeichnet, dass** die Prüfmatten oder -schalen (12) oder der Schaum und/oder das Farbmittel von dem unbemannten Luftfahrzeug (10) selbst ausgelegt und/oder eingesammelt werden.

5. Verfahren nach dem vorstehenden Anspruch 4, **dadurch gekennzeichnet, dass** die Prüfmatten oder -schalen (12) oder der Schaum und/oder das Farbmittel aus biologisch abbaubarem Material bestehen.

6. Verfahren nach Anspruch 5, **dadurch gekennzeichnet, dass** die Form und/oder Größe der Prüfmatten oder -schalen (12) oder des Schaumes und/oder des Farbmittels mittels bildanalytischer Mittel aus den aufgenommenen Bildern bestimmt wird.

7. Verfahren nach dem vorstehenden Anspruch 6, **dadurch gekennzeichnet, dass** die Prüfmatten oder -schalen (12) oder der Schaum und/oder das Farbmittel an den Feldgrenzen (15) ausgebracht werden.

8. System zur Durchführung des Verfahrens nach zumindest einem der Ansprüche 1 bis 7, wobei das unbemannte Luftfahrzeug (10) auf der landwirtschaftlichen Arbeitsmaschine (4) start- und landefähig ist, das unbemannte Luftfahrzeug (10) eine wieder auffüllbare und/oder austauschbare Energiespeichereinheit aufweist, das unbemanntes Luftfahrzeug (10) mit einer Einrichtung zur digitalen Bildaufnahme und mit einer Einheit zur Analyse der digital aufgenommenen Bilder und/oder mit einer Einheit zum Senden der digital aufgenommenen Bilder an eine mit einer Einheit zur Bildanalyse ausgestattete Basisstation und/oder landwirtschaftliche Arbeitsmaschine (4) ausgestattet ist, **dadurch gekennzeichnet, dass** das unbemannte Luftfahrzeug (4) mit einer Einrichtung zum Transportieren und Verteilen und/oder Einsammeln von Prüfmatten oder -schalen (12) oder Schaum und/oder Farbmittel ausgestattet ist.

## Claims

1. Method for recording at least one scattering parameter of the scattered particles (6) of a scatterable material in a field, wherein the scatterable material is dispensed by a preferably agricultural work machine (4), wherein the at least one scattering parameter of the scattered particles (6) of the scatterable material is recorded by at least one preferably substantially vertical take-off and landing, preferably autonomously acting, unmanned aerial vehicle (UAV) (10) that has at least one unit for recording at least one scattering parameter of the scattered particles (6) of a scatterable material, that has a unit for transmitting and/or receiving control signals from a and/or to a base station and/or agricultural work machine (6) and at least one unit for sending (13) the recorded data to a base station and/or to an agricultural work machine (4) and that has a position determination unit, that scattering parameters of the scattered particles (6) of a scatterable material are the scattering distance(s) and/or the distribution of the dispensed granular scattered material particles (6) of scatterable material, wherein the machine driver lays out test mats or test panels (12) or foam and/or colourant at defined positions, by way of which the scattered material particles (6) of the scatterable material are then dispensed and at least partly caught and/or retained, wherein the at least one unmanned aerial vehicle (UAV) (10) takes over the determination of the positions for laying out test mats or panels (12) or foam and/or colourants and marks the determined positions with suitable means for the machine driver.

2. Method according to Claim 1, **characterized in that** the unmanned aerial vehicle (10) records an image, from the laid out test mats or panels (12) or foam and/or colourants after the scattered material particles (6) of the scattered material have been dispensed thereby, of the mats or panels (12) or of the foam and/or colourant containing the caught and/or retained scattered material particles (6) by way of a digital image recording apparatus, which image is associated with the respective mat, panel, foam and/or colourant position.

3. Method according to preceding Claim 2, **characterized in that** the position of the material particles (6) on/in each mat/panel (12)/each foam and/or colourant is determined in the recorded digital image by way of suitable image analysis, **in that** the actual distribution of the material particles (6) is calculated from the position, **in that** this actual distribution is compared with a stored setpoint distribution and **in that** adjustments to the operating parameters of the work machine (4) are deduced from the differences established in this comparison.

4. Method according to preceding Claim 3, **characterized in that** the test mats or panels (12) or the foam and/or the colourant are laid out and/or collected by the unmanned aerial vehicle (10) itself.

5. Method according to preceding Claim 4, **characterized in that** the test mats or panels (12) or the foam and/or the colourant consist of biodegradable material.

6. Method according to Claim 5, **characterized in that** the shape and/or size of the test mats or panels (12) or of the foam and/or of the colourant is determined from the recorded images by way of image analysis means.

7. Method according to preceding Claim 6, **characterized in that** the test mats or panels (12) or the foam and/or the colourant are applied to the field boundaries (15).

8. System for performing the method according to at least one of Claims 1 to 7, wherein the unmanned aerial vehicle (10) is able to take off and land from the agricultural work machine (4), the unmanned aerial vehicle (10) has a rechargeable and/or exchangeable energy storage unit, the unmanned aerial vehicle (10) is equipped with digital image recording apparatus and with a unit for analysing the digitally recorded images and/or with a unit for transmitting the digitally recorded images to a base station and/or agricultural work machine (4) equipped with an image analysis unit, **characterized in that** the unmanned aerial vehicle (4) is equipped with an apparatus for transporting and distributing and/or collecting test mats or panels (12) or foam and/or colourant.

## Revendications

1. Procédé d'acquisition d'au moins un paramètre de dispersion des particules dispersées (6) d'un produit apte à la dispersion dans un champ, le produit apte à la dispersion étant épandu par une machine de travail (4) de préférence agricole, l'acquisition de l'au moins un paramètre de dispersion des particules dispersées (6) du produit apte à la dispersion étant effectuée par au moins un aéronef sans pilote (ULF) (10), de préférence à décollage et atterrissage sensiblement vertical, de préférence à action autonome, lequel possède au moins une unité servant à l'acquisition d'au moins un paramètre de dispersion des particules dispersées (6) d'un produit apte à la dispersion, qui possède une unité destinée à émettre et/ou à recevoir des signaux de commande depuis et/ou au niveau d'une station de base et/ou une machine de travail (6) agricole et au moins une unité destinée à communiquer (13) les données acquises à une station de base et/ou à une machine de travail (4) agricole et qui possède une unité servant à la détermination de position, que les paramètres de dispersion des particules dispersées (6) d'un produit apte à la dispersion étant la ou les largeurs de projection et/ou la distribution des particules de produit dispersées (6) en grains du produit apte à la dispersion, le conducteur de la machine mettant en place, à des positions fixées, des nattes de contrôle ou des coques de contrôle (12) ou de la mousse et/ou un colorant, au-dessus desquels les particules de produit dispersées (6) du produit apte à la dispersion sont ensuite épandues et au moins partiellement capturées et/ou retenues, l'au moins un aéronef sans pilote (ULF) (10) prenant en charge la détermination des positions pour la mise en place des nattes ou coques de contrôle (12) ou de la mousse et/ou des colorants et marquant les positions déterminées pour le conducteur de la machine avec des moyens appropriés.

2. Procédé selon la revendication 1, **caractérisé en ce que** l'aéronef sans pilote (10) enregistre, au moyen d'un dispositif d'enregistrement d'images numérique, à partir des nattes ou coques de contrôle mises en place (12) ou de la mousse et/ou des colorants, après l'épandage au-dessus de ceux-ci des particules de produit dispersées (6) du produit apte à la dispersion, une image de la natte ou coque (12) ou de la mousse et/ou du colorant avec les particules de produit dispersées (6) capturées et/ou retenues associée à la position respective de la natte, de la coque, de la mousse et/ou du colorant.

3. Procédé selon la revendication 2 précédente, **caractérisé en ce que** la position des particules de produit (6) sur/dans chaque natte/coque (12), chaque mousse et/ou colorant est déterminée à partir de l'image numérique enregistrée au moyen d'une analyse d'image appropriée, **en ce que** la distribution réelle des particules de produit (6) est calculée à partir de la position, **en ce que** cette distribution réelle est comparée à une distribution de consigne stockée et **en ce que** des adaptations des paramètres de fonctionnement de la machine de travail (4) sont dérivées des différences constatées lors de cette comparaison.

4. Procédé selon la revendication 3 précédente, **caractérisé en ce que** les nattes ou coques de contrôle (12) ou la mousse et/ou le colorant sont mis en place et/ou recueillis par l'aéronef sans pilote (10) lui-même.

5. Procédé selon la revendication 4 précédente, **caractérisé en ce que** les nattes ou coques de contrôle (12) ou la mousse et/ou le colorant se composent de matériau biodégradable.

6. Procédé selon la revendication 5, **caractérisé en ce que** la forme et/ou la taille des nattes ou coques de contrôle (12) ou de la mousse et/ou du colorant est déterminée à partir des images enregistrées à l'aide de moyens d'analyse d'images.

7. Procédé selon la revendication 6 précédente, **caractérisé en ce que** les nattes ou coques de contrôle (12) ou la mousse et/ou le colorant sont épandus au niveau des limites du champ (15).

8. Système pour mettre en œuvre le procédé selon au moins l'une des revendications 1 à 7, l'aéronef sans pilote (10) pouvant décoller et atterrir sur la machine de travail (4) agricole, l'aéronef sans pilote (10) possédant un accumulateur d'énergie rechargeable et/ou remplaçable, l'aéronef sans pilote (10) étant équipé d'un dispositif d'enregistrement d'images numérique et d'une unité destinée à analyser les images enregistrées numériquement et/ou d'une unité destinée à envoyer les images enregistrées numériquement à une station de base équipée d'une unité destinée à l'analyse des images et/ou à la machine de travail (4) agricole, **caractérisé en ce que** l'aéronef sans pilote (4) est équipé d'un dispositif servant à transporter et à distribuer et/ou à recueillir des nattes ou coques de contrôle (12) ou de la mousse et/ou du colorant.
